# EUROPEAN PATENT SPECIFICATION

(11) **EP 3 426 529 B1**
(45) Date of publication and mention of the grant of the patent: **05.05.2021**
(21) Application number: 17712403.9
(22) Date of filing: 13.03.2017
(51) Int. Cl.: B60S 3/00

(54) **LIGHTED VEHICLE WASH DRYER ASSEMBLY CONTROL SYSTEM**
STEUERUNGSSYSTEM FÜR BELEUCHTETE WASCH-TROCKNER-ANORDNUNG FÜR EIN FAHRZEUG
SYSTÈME DE COMMANDE D'ENSEMBLE DE LAVAGE ET DE SÉCHAGE DE VÉHICULES ÉCLAIRÉ

(30) Priority: 11.03.2016 US 201615067693
(43) Date of publication of application: 16.01.2019
(73) Proprietor: BELANGER, INC., Hamilton, OH 45011 (US)
(72) Inventor: BELANGER, Michael, J., Northville MI 48167 (US)
(74) Representative: Monzón de la Flor, Luis Miguel
(86) International application number: PCT/US2017/022071
(87) International publication number: WO 2017/156525

(56) References cited:
- US-A1- 2011 277 792
- US-A1- 2015 274 134
- US-A1- 2016 059 831

## Description

### CROSS-REFERENCE TO RELATED APPLICATION

The present application claims priority to U.S. Utility Patent Application Serial No. 15/067693, filed March 11, 2016.

### TECHNICAL FIELD

The present disclosure relates generally to a vehicle wash or treatment system for treating an exterior vehicle surface. More specifically, the present disclosure relates to a vehicle wash or treatment system that utilizes a lighted dryer assembly to convey information about the vehicle wash system

Document US 2016/059831 discloses a prior art vehicle treatment system.

### BACKGROUND OF THE INVENTION

Vehicle wash systems have become a common way for vehicle owners to quickly and efficiently have their vehicles cleaned without having to wash and clean them by hand. Depending upon how dirty the vehicle is, the level of cleanliness the vehicle owner seeks to achieve, and the amount of money the vehicle owner is willing to spend, there are a variety of different types of vehicle wash systems with different service options available to meet those needs. For example, full service vehicle wash systems provide vehicle owners with both interior and exterior vehicle cleaning services. These are generally the most expensive type of vehicle wash system. Self-service type vehicle wash systems offer vehicle owners a less expensive option for cleaning their vehicles. However, with these self-service systems, vehicle owners must operate the equipment themselves to clean the interior and/or exterior of their vehicles. The most common type of vehicle wash systems are those that offer automated exterior vehicle cleaning services only and which are often embodied as conveyerized tunnel systems or roll over (in-bay) machines. In terms of price, this last type of vehicle wash systems is generally priced in between the other two types of vehicle wash systems.

Each of the above-described vehicle wash systems typically presents vehicle owners with a variety of different cleaning and treatment options and services for varying fees. For example, most vehicle wash systems (whether full service or conventional) generally offer vehicle owners a basic wash package that consists of treating a vehicle exterior with conventional cleaning services. This basic wash package is generally provided for a base fee and is often referred to as a regular or base wash. For customers that want additional treatments or services to be performed on their vehicle, many vehicle wash systems offer an upgraded package that includes additional services for payment of an increased fee, such as an under body wash or a tire shine. Other customers may want the "works" and many vehicle wash systems offer a still further upgraded package which includes all of its premium services. The additional services in these upgraded packages, which are often referred to as premium packages, can include an under body rust inhibitor or a tire polish. The premium packages are generally available at a fee that is higher than any of the other packages available.

As is known, the environment in vehicle wash systems is generally dark with little light and thus visibility for vehicle owners is usually very poor. Consequently, some wash owners have made an attempt to brighten this environment and enhance a user's wash experience though the use of lighted arches and signs, to create somewhat of a "carnival" feel. Many vehicle wash facilities also employ lights and lighted signs as a way to advertise extra wash services like tire shine, sealer wax, and triple foam as well as to drive traffic to and create more revenue for their vehicle wash facility. While these lighted arches and lighted signs may be effective in drawing consumer attention to the wash or these extra services they offer, the lighting is very selective and does little to improve the overall environment within the vehicle wash facility.

Additionally, these lighted arches and signs are generally provided outside of or at the entrance end of the vehicle wash system in order to try and attract potential customers to take advantage of the vehicle wash services or to provide a positive impression for customers before they enter the vehicle wash system. However, lighting effects have not been used at or adjacent the exit end of the vehicle wash system, which is generally the area visible to other motorists passing by the vehicle wash facility. Typically, any lights in other areas of the wash facility cannot be readily seen by others driving by the facility. Thus, the exit ends of current vehicle wash systems are still dark, noisy and relatively intimidating to both customers and potential customers. Moreover, any lights in other parts of the wash facility have only a limited effect on the marketing of wash services to vehicles passing thereby as they cannot be readily seen.

Also, due to the dark environment present in vehicle wash facilities, coupled with the fact that the vehicle windows are usually covered with soap and water during the vehicle wash process, it is very difficult for vehicle owners to see if the wash services/options they requested and paid for are being applied to their vehicle. This is true, even if they know what they are looking for. Consequently, it is not uncommon for a vehicle owner to select and pay for one package and have the wash system provide a different package. This can occur through inadvertent entry of the package selection into a system controller by a wash owner/operator or improper intent on the part of the operator of the vehicle wash system to pocket the difference between the package paid for and that provided. As this practice is known to occur and it is difficult to rectify after the fact, some vehicle owners are dissuaded from purchasing packages with additional services for fear that those services will not be provided. This has resulted in a significant loss of revenue for the car wash industry.

It would thus be desirable to provide a method and system that overcomes these disadvantages with existing vehicle wash systems.

### SUMMARY OF THE INVENTION

It is therefore an aspect of the present disclosure to provide a lighted dryer assembly for a vehicle wash facility that provides improved aesthetics.

It is another aspect of the present disclosure to provide a lighted dryer assembly for a vehicle wash facility that enhances customer experience during the wash process.

It is a further aspect of the present disclosure to provide a lighted dryer assembly for a vehicle wash facility that assists in creating and/or enhancing brand recognition.

It is a still another aspect of the present disclosure to provide a lighted dryer assembly for a vehicle wash facility that can brighten the environment therein and particularly at an exit end of the wash facility.

It is yet another aspect of the present disclosure to provide a lighted dryer assembly for a vehicle wash facility that yields enhanced brightness and aesthetics when the vehicle wash system is not in use.

It is still yet another aspect of the present disclosure to provide a lighted dryer assembly for a vehicle wash facility that provides confirmation to a customer that a particular event is occurring, such as an ordered service.

It is yet a further aspect of the present disclosure to provide a vehicle wash system that provides improved diagnostic information to a vehicle wash operator to facilitate efficient operation of the system.

It is still yet a further aspect of the present disclosure to provide a vehicle wash system that can assist in increased revenue generation.

It is still yet a further aspect of the present disclosure to provide a vehicle wash system that can assist with marketing of the vehicle wash facility.

In accordance with the above and the other aspects of the disclosure, a vehicle wash system is provided. The system has an entrance end and an exit end and includes a dryer element disposed adjacent the exit end. The dryer element includes an inlet, a housing, and at least one outlet for emitting high velocity air onto an exterior surface of a vehicle, The dryer element includes at least one light source associated therewith. The at least one light source has a plurality of modes with each of the plurality of modes associated with a distinct system condition. The system includes a controller in communication with the at least one light source and configured to receive data and to activate one of the plurality of modes in response to the system condition in effect based on the received data. In at least one of the plurality of modes, the controller directs the at least one light source to emit light in a predetermined color

The invention is defined by the independent claims.

### BRIEF DESCRIPTION OF THE DRAWINGS

Other aspect of the present disclosure will be readily appreciated, as the same becomes better understood by reference to the following detailed description when considered in connection with the accompanying drawings wherein:
FIG 1 is a schematic illustration of a vehicle wash system having a plurality of vehicle wash components in accordance with an aspect of the disclosure;
FIG 2 is a perspective view of a lighted vehicle wash dryer assembly including a pair of opposing blower assemblies in accordance with an aspect of the present disclosure;
FIG 3 is a front view of a lighted vehicle wash dryer assembly including a pair of opposing blower assemblies in accordance with an aspect of the present disclosure;
FIG 4 is a schematic illustration of a blower housing for a dryer unit with an illumination source therein in accordance with an aspect of the present disclosure;
FIG 5 is an exploded view of a blower housing for a dryer unit and illumination source in accordance with an aspect of the present disclosure;
FIG 6 is a cross-sectional view of the dryer unit housing of FIG 4 in the direction of the arrows 6-6;
FIG 7 is a side view of a dryer unit in accordance with an aspect of the present disclosure;
FIG 8 is a front view of a blower assembly in accordance with an aspect of the present disclosure;
FIG 9 is an exemplary package menu sign for a vehicle wash system in accordance with an aspect of the disclosure;
FIG 10 is a schematic diagram illustrating a method of operating a vehicle wash system according to an aspect of the disclosure;
FIG 11 is a schematic diagram illustrating a method of operating a vehicle wash system according to another aspect of the disclosure;
FIG 12 is a schematic diagram illustrating a method of operating a vehicle wash system according to a further aspect of the disclosure; and
FIG 13 is a schematic illustration of a vehicle wash system according to another aspect of the disclosure.

### DETAILED DESCRIPTION OF THE INVENTION

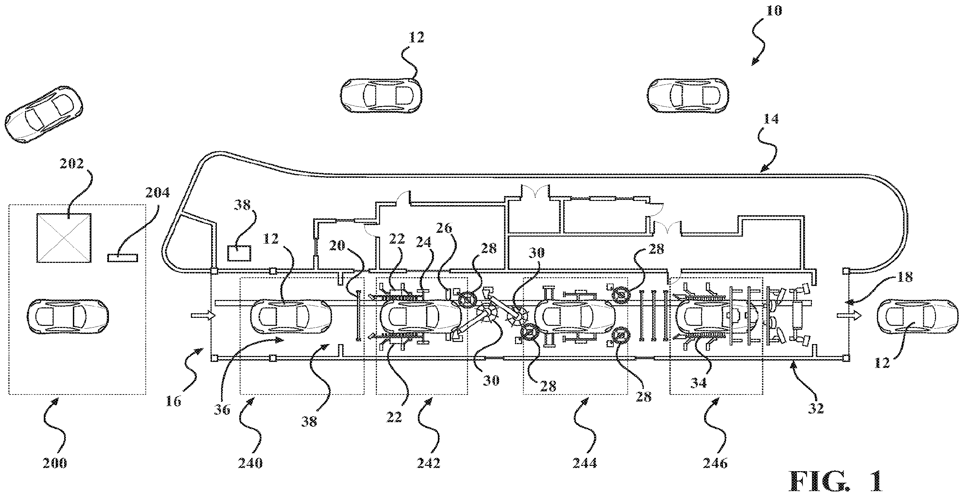

According to an aspect, the present disclosure relates to a vehicle wash system 10. As shown in FIG 1, the system **10** may be configured as a tunnel car wash, where a vehicle **12** is conveyed through the wash process by a conveyor or the like as is known in the art. Alternatively, the vehicle wash system **10** may be configured as a roll-over type where the vehicle **12** remains stationary and wash components move with respect to the vehicle **12** to perform the vehicle wash process. Other suitable wash processes and systems may also be employed. It will be appreciated that the disclosed system could also be employed in connection with a variety of other vehicle wash systems including, full service, manual or self-serve wash processes.

According to an aspect, the vehicle wash system **10** may be housed within a vehicle wash facility **14** having an entrance end 16 where a vehicle enters and an exit end **18** where the vehicle leaves. According to a further aspect, the vehicle wash system **10** may also include a variety of vehicle wash components that engage and/or treat the exterior of the vehicle **12** as it passes through the vehicle wash facility **14** to effectuate the vehicle wash process. For example, as illustratively shown in FIG 1, the vehicle wash system **10** can include a rinse arch **20**, which sprays water onto the vehicle, The system **10** can also include a pair of wheel scrubbers **22** for cleaning vehicle wheels as well as the lower portion of a vehicle. Additionally, the system **10** may include a top wheel or brush **24** for cleaning an upper exterior surface of a vehicle. Moreover, the system **10** can also include a bubble or foam delivery device **26** that generates bubbles and emits them directly onto the vehicle exterior.

According to another aspect, the system **10** can include one or more side brushes **28** for contacting side exterior surfaces of a vehicle and a plurality of wrap brushes **30** for contacting both front and back vehicle surfaces. The system **10** can also include a drying section **32** for removing water from the vehicle exterior. According to a further aspect, the system **10** can include a wheel polishing device **34**. It will be appreciated that more, less or different wash components may be employed as part of the vehicle wash system. For example, the system **10** may also include components for treating the vehicle undercarriage, for applying body sealant, and for applying polish wax to the vehicle and/or performing a variety of different functions. Additionally, multiples of the same components may be employed as part of the system as desired. Further, the components may take on a variety of different configurations. Moreover, the order, placement and sequence of the components within the system **10** may also vary. According to an aspect, the components may be designed to engage and/or treat the vehicle **12** as it is disposed within a vehicle treatment area **36** of the vehicle wash facility **14.**

According to an aspect, the vehicle wash system **10** may include a controller 38 that is in communication with all of the treatment components so that the system **10** may operate automatically under computer control. According to another aspect, the controller **38** may be employed to direct the operation and timing of the vehicle wash components. For example, the controller **38** could signal certain vehicle components to start operating as a vehicle approaches and then signal them to shut down after the vehicle has passed. It will be appreciated that the vehicle wash system **10** could include a variety of sensors or sensing devices to track the location of the vehicles within the system and communicate that information to the controller **38**. It will also be appreciated that a computer, processer or other suitable control device may alternatively be employed to control the system and its components. According to further aspect, each of the vehicle wash components, i.e., **20**, **22**, **24**, **26**, **28**, **30**, **32** and **34** utilized in the vehicle wash system **10** can include a light source associated therewith, as discussed in more detail below.

According to an aspect, the present disclosure relates to the drying section **32**. As is known, the drying section **32** may be disposed adjacent the exit end **18**. According to an aspect, the drying section **32** can include one or more dryer assemblies **100**.

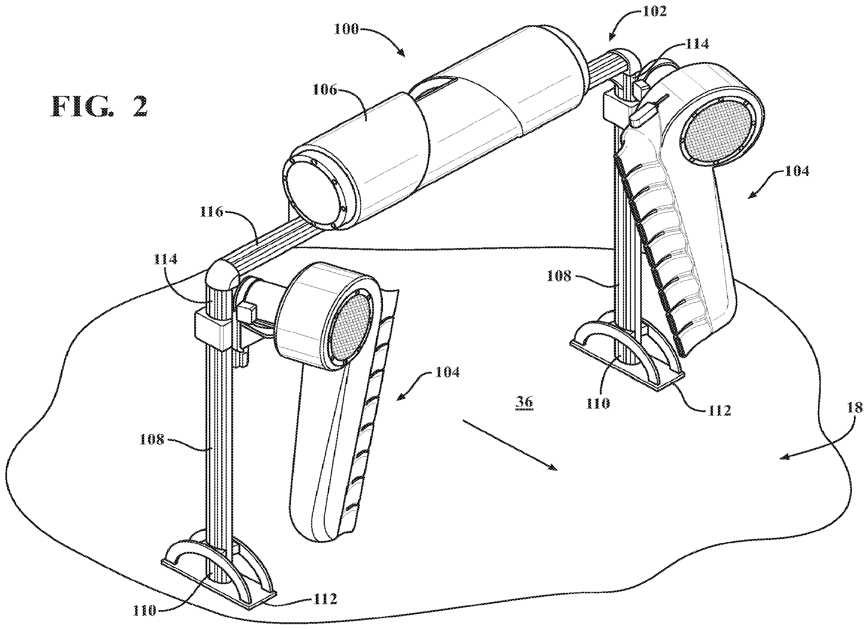

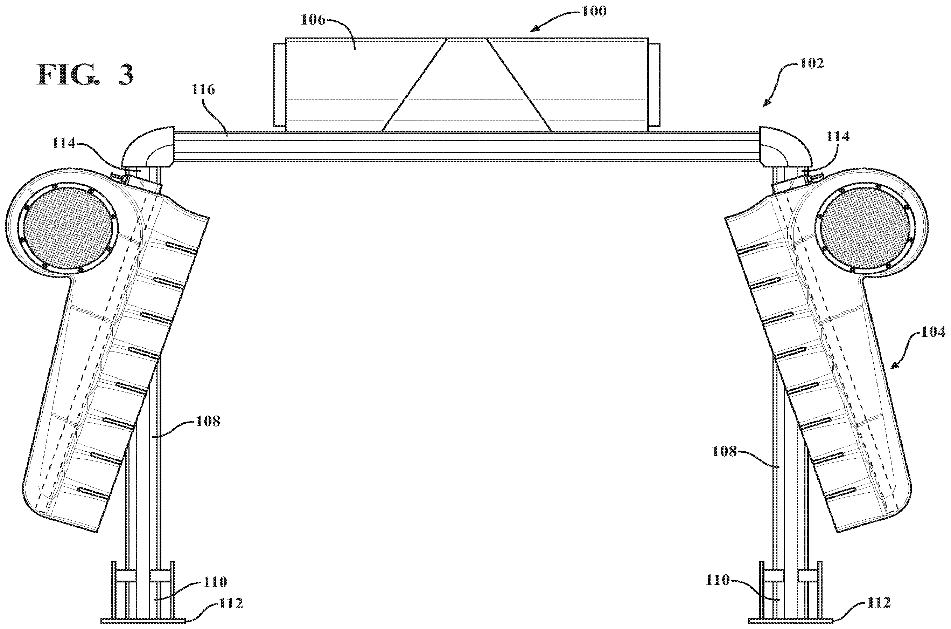

With reference to FIGs 2 and 3 illustrate an exemplary dryer assembly **100** in accordance with an aspect. As shown, the dryer assembly **100** can include a frame portion **102**, a pair of side dryer units **104**, which are disposed on the frame portion **102** on either side of a vehicle treatment area **36** to direct air onto side vehicle surfaces, and an overhead blower assembly **106** disposed on the frame **102** to direct air onto an upper exterior surface of a vehicle in the vehicle treatment area **36.** According to an aspect, the frame portion **102** can include a pair of leg portions **108**, which are disposed on either side of the vehicle treatment area **36.** Each leg portion **108** can include a lower end portion **110**, which can engage a base portion **112** that rests on the ground to hold the leg portions 108 in a generally vertical position. The leg portions **108** can each also include an upper end portion **114** which can engage an overhead cross-piece portion **116** that spans the vehicle treatment area **36**. It will be appreciated that the dryer assembly **100** and the frame portion **102** can take on a variety of different configurations. It will also be appreciated that more or less or differently configured blower assemblies **104** may be employed on the frame portion **102** and that they may be disposed in different locations on the frame portion 102.

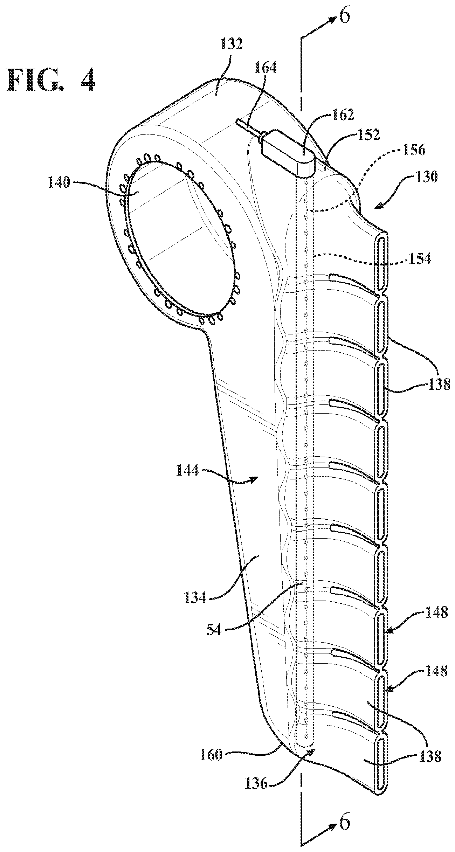

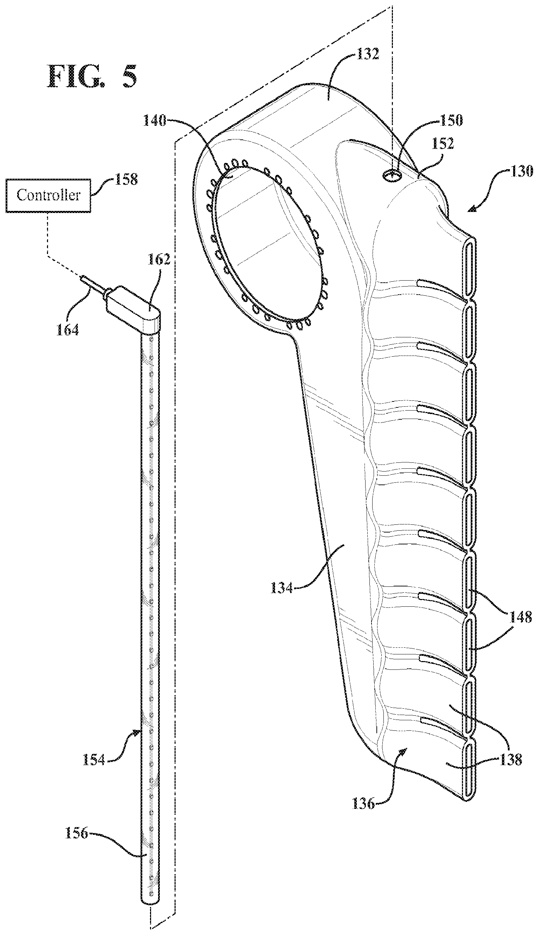

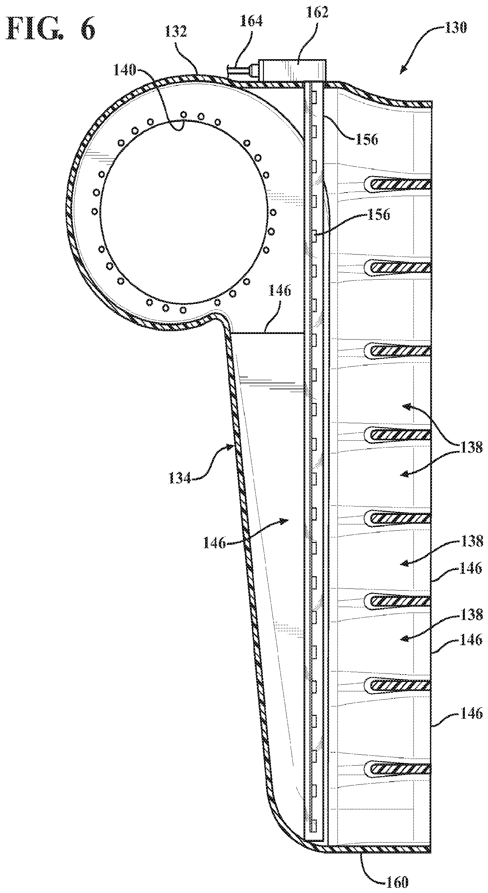

FIGs 4 through 8 schematically illustrate a dryer unit **120** for a dryer assembly **100** in accordance with an aspect of the disclosure. According to an aspect, the dryer unit **120** can include a housing **130** with an upper head portion **132**, a body portion **134**, and an outlet portion **136** including a plurality of nozzle portions **138**. According to an aspect, the dryer housing **130** may be a single integral structure that is formed from a plastic material in a rotational molding process. It will be appreciated that the housing **130** may be formed from a variety of different materials and that a variety of other suitable processes may be employed. According to a still further aspect, the housing **130** may be formed of a transparent or translucent material. Additionally, the housing **130** may be formed in a variety of different colors. It will also be appreciated that the housing **130** can have a variety of different configurations.

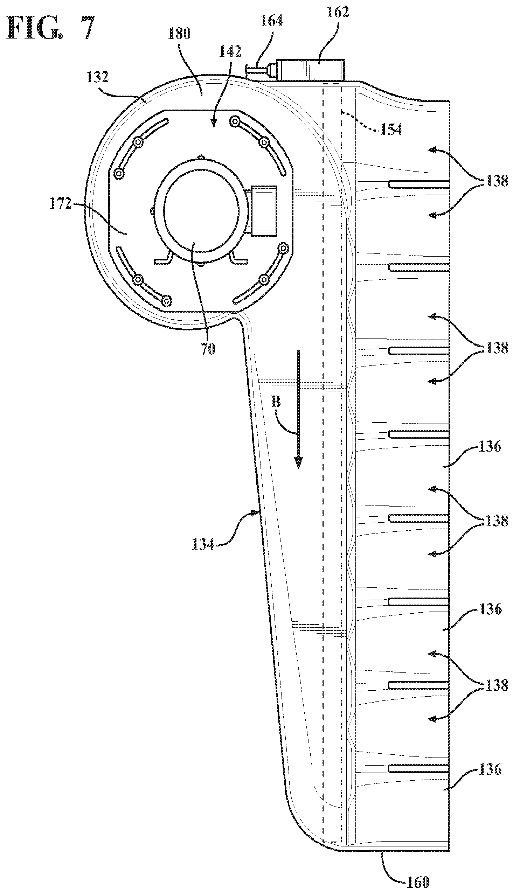

According to a further aspect, the upper head portion **132** can include a motor assembly opening **140** for receipt of a motor unit **142**, as shown best in FIGs 7 through 8. The motor assembly opening **140** may be in communication with an interior blower cavity **144** disposed in the body portion **134** by way of an inlet opening **146**. According to an aspect, the blower cavity **144** may serve as an air passageway that conveys air from the motor unit **142** toward a lower portion of the housing **130** in a direction generally indicated by arrow B. The interior blower cavity **144** may be in communication with each of the plurality of nozzle portions **138**. According to another aspect, the nozzle portions **138** may be configured to generally taper outwardly from the body portion **134** to an air exit outlet **148**. According to an aspect, the air exit outlets **148** each have an area that is substantially smaller than the size of an area of the inlet opening **146**. It will be appreciated that the nozzle portions **138** can have a variety of other configurations.

According to another aspect, a clearance opening **150** may be formed in an upper surface **152** of the body portion **134**. According to a further aspect, a clear elongated housing structure **152**, such as a clear PVC pipe may be inserted into the clearance opening **150** and into the interior blower cavity **144**. According to yet another aspect, an illumination or light source **156** may be disposed in the elongated housing structure **154** so that one or more illumination sources may be located within the housing **130**. The illumination source **156** may be an array of light emitting diodes (LEDs); however a variety of other suitable illumination sources may be employed. According to an aspect, the illumination sources may be LEDs that are configured to emit light in accordance with the RGB color convention as directed by a controller **158.** For example, the illumination source **156** may be directed to emit a variety of different colors. According to another aspect, the controller **158** may be configured to cycle the illumination source **156** through a variety of different colors. According to an aspect, the elongated housing structure **154** may be configured as a pipe and may extend the full height from the upper surface **152** to the lower surface **160** of the housing 130. It will be appreciated that it could extend a lesser portion of the height.

According to another aspect, the light source **156** could be otherwise associated with the dryer unit **120** such that it could illuminate the interior of the housing **130**. According to another aspect, the light source **156** could be disposed behind the housing **130** and the housing **130** could have an opening disposed adjacent the light source **156** such that the light could illuminate the interior of the housing **130** as well as the housing itself. According to a further aspect, the housing **130** could serve as a light pipe such that the light source **156** can be positioned to illuminate the interior of the housing **130**, such as by positioning the light source **156** adjacent an edge thereof to make the housing **130** glow to provide a lighted effect. It will be appreciated that the light source **156** could be disposed in a variety of other locations to illuminate the housing **130**.

It will also be appreciated that the elongated housing structure **154** can take on a variety of different configurations and may be formed of different materials and may be formed of different colors. For example, the elongated housing structure **154** may be formed of a translucent material. It will be appreciated that any number of illumination sources **156** may be employed within the housing **130**. The illumination sources **156** may be connected to, disposed within or associated with the housing **130** in a variety of suitable ways. It will be further appreciated that more than one elongated housing structure **154** may be disposed in the housing **130** to hold multiple illumination sources **156**. It will also be appreciated that the elongated housing structure **154** and the illumination sources **156** can be combined in a single unit. Alternatively, one or more illumination sources **156** may be disposed in the housing **130** independent from and without any elongated housing structure **154**.

According to an aspect and with reference to FIGs 4 through 6, a conduit box **162** may be disposed on the upper surface **152** of the body portion **134**. The conduit box **162** may be configured to effect an electrical connection between the illumination sources **156** and an electrical power source (not shown). According to an aspect, an electrical cord **164** may extend from the conduit box **162** for communication with the controller **158** to control lighting of the illumination sources **156**. As will be appreciated, the conduit box **162** can include components for assisting the enabling and disabling of the illumination sources **156**, as directed by the controller **158**. According to a further aspect, the controller **158** can turn the illumination sources **156** on to emit light through the housing **130** (enabled mode) and off such that no light is emitted from the illumination sources **156** (disabled mode). It will also be appreciated that the controller **158** can be in communication with other light sources in the vehicle wash system, including associated with other vehicle wash components, such that the illumination sources **156** may be activated and synchronized with other light sources in connection with a package confirmation function, as is disclosed in Applicant's co-pending U.S. Patent Application Serial No.14/687,704, filed April 15, 2015, and entitled "Vehicle Wash Package Selection Confirmation System" and/or an active site marketing function, as is disclosed in Applicant's co-pending U.S. Patent Application Serial No. 14/695,773, filed April 24, 2015, and entitled "Active Site Marketing Vehicle Wash System".

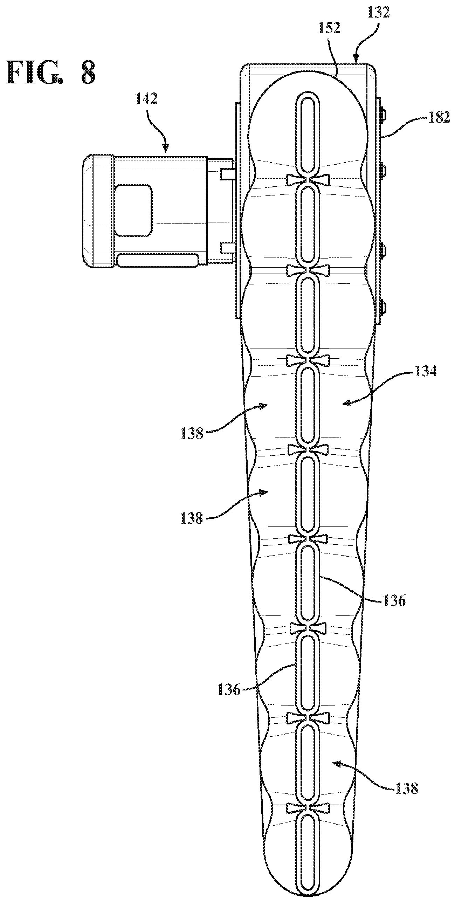

FIGs 7 and 8 illustrate a motor unit assembly 142 for a dryer assembly 100 in accordance with an aspect of the disclosure and attachment thereto to the blower housing **130**. According to an aspect, the motor unit assembly **142** can include a motor **170**. The motor **170** may be in communication with a mount plate **172** which may be employed to secure the motor unit assembly **142** to a first side **180** of the upper head portion **132** of the blower housing **130**. According to an aspect, the motor **170** may include a high speed impeller **174** via an opening in the mount plate **172**. According to a further aspect, in operation, upon actuation of the motor unit **170**, the impeller **174** may be caused to rotate to draw air into the second side **182** of the upper head portion **132**. An air inlet portion may be secured to the second side **182** of the upper head portion **132**. The air inlet portion may have a mesh layer disposed over an air inlet opening to prevent large objects from being drawn into the upper head portion **132** when the impeller is operating. According to another aspect, the motor **170** may be an electric motor that is in communication with a source of power. However, a variety of other suitable types of motors or other power sources may be employed.

According to an aspect, the illumination source **156** has an enabled mode and a disabled mode. In the enabled mode, the illumination source **156** may be activated by the controller **158** enabled such that it emits light The emitted light can pass through the clear elongated housing structure **154** and through the translucent housing **130**. According to an aspect, the illumination source **156** can also cause the body of the housing **130** to glow, which provides a unique aesthetic appearance. In the disabled mode, the illumination source **156** may be turned off by the controller **158** such that no light is emitted therefrom and the housing **130** may be dark. The illumination sources **156** can be disposed in the housing in a variety of different locations and can be secure to the outside of the housing or formed as an integral unit with the housing.

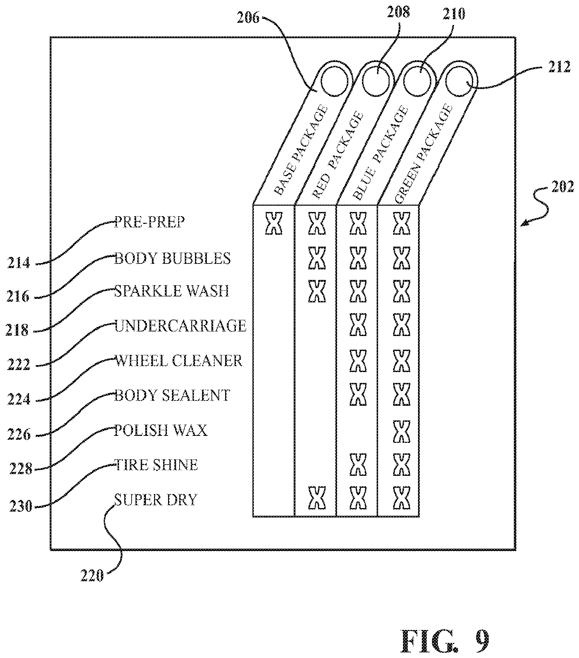

According to an aspect, the disclosure also relates to a method of conveying information to a vehicle owner or a vehicle wash operator. In accordance with one aspect, when a vehicle arrives at the vehicle wash facility, the vehicle can encounter a package selection zone **200** where a vehicle operator is presented with various treatment packages and associated prices for treatment of the vehicle. The various treatment options may be presented to the vehicle occupant in a variety of different ways. According to an aspect, they may be presented to the vehicle occupant on a display screen, a menu board, or a variety of other suitable ways. An exemplary menu board is schematically depicted in FIG 9 as reference number **202**. Once the vehicle operator has decided which vehicle treatment package to purchase, they may indicate their package selection in a variety of different ways. According to another aspect, the vehicle operator may stop at an operator station, generally designated by reference number **204**, and convey their package selection to an operator who can manually input that selection into a computer or controller to start the process. According to another aspect, the vehicle operator may enter their selection electronically such as on an electronic terminal that also allows for selection of the desired package selection and payment at that terminal as will be understood by one of ordinary skill in the art. Once their selection is input, the controller **38** can track that operator's vehicle as it travels throughout the wash process and can direct that the services associated with the package selected by the operator be performed.

With reference to FIG 9, the disclosed vehicle wash system **10** can offer various treatment packages that are identified by different identifiers and each have different services associated therewith. As discussed above, these may be presented on a menu board or display. According to an aspect, the primary identifier associated with the various treatment packages of the present disclosure may be a color. For example, with reference to FIG 9, the Base package, as generally indicated by reference number **206**, may be identified as the White package and may be designated by the color white or no color. The Red package, which includes additional wash services over the White package, is generally indicated by reference number **208**, and may be designated by the color red. The Blue package, which includes additional wash services over and above the White package and the Red package, is generally identified by reference number **210**, and may be designated by the color blue. The Green package, which can include the most wash services of the various packages available, is generally identified by reference number **212**, and may be designated by the color green. It will be appreciated that more or less packages may be presented to vehicle occupants. It will also be appreciated that the various packages can be assigned any color or any other identifier.

According to an aspect and with continued reference to FIG 9, the services offered with the Base package may be a standard wash and include a pre-prep service, which is generally by reference number **214**. According to another aspect, with the Red package the vehicle occupant can also get the pre-prep wash **214** along with additional services, including body bubbles, identified generally by reference number **216**, sparkle wash, generally identified by reference number **218**, and super dry, generally identified by reference number **220**. As will be appreciated, the vehicle occupant may elect to purchase the Red package for an additional fee over and above the fee for Base package,

Further, with the Blue package, the vehicle occupant may receive additional services in addition to those offered with the Red package, including undercarriage cleaning, generally identified by reference number **222**, wheel cleaning services, generally identified by reference number **224**, body sealant, generally identified by reference number **226**, and tire shine services, generally identified by reference number **228**. According to an aspect, the vehicle occupant may purchase the Blue package for a fee that is greater than the Red package.

According to a further aspect, the Green package can offer the vehicle occupant the most services, According to an aspect, the Green packages can offer the vehicle occupant all the same services available with the Red package as well as an additional polish wax service, generally identified by reference number **230**.

According to an aspect, once the vehicle occupant has selected the color package option and that selection has been entered into and recognized by the controller **38** of the computer system, the vehicle wash system **10** can be coordinated such that the color of the illumination elements associated with the dryer assembly **100** matches the color of the vehicle owner's selected package. In other words, the colors emitted from the light sources associated with the dryer assembly **100** may be coordinated with a customer's package purchase. Thus, as the vehicle approaches the dryer section **32**, the illumination source **156** associated with the dryer housing **130** may be directed by the controller **38** to emit a color that matches the color of package selected by the vehicle owner. According to an aspect, the controller **38** could also be in communication with the illumination elements associated with the other wash components to control their operation and match their color to the color assigned to the selected package option. For example, the controller **38** may operate all the illumination elements in accordance with a DMX protocol. According to another aspect, a separate DMX controller could be utilized to control the lighting of the illumination elements. The DMX controller could be employed as a laptop. The DMX controller could also include software that allows the controller to accomplish the functionality described herein. The DMX controller could take on a variety of other configurations.

According to an aspect, after the vehicle occupant's package selection purchase has been entered into the system, the vehicle can proceed through the entrance end **16** of the vehicle wash facility **14**. According to an aspect, the controller **38** together with the sensors and other devices can track the location of the vehicle within the wash system **10**. According to a further aspect, the vehicle **12** can travel to a first vehicle zone **240**. According to an aspect, the lights on all of the components in and adjacent the first vehicle zone **240** can be illuminated with a color that matches the package selection by the vehicle occupant. Thus, if the vehicle occupant selected the "Blue" package, the illumination elements of all of the components in or adjacent the first vehicle zone **240** can emit a blue light as controlled by the controller **38** to provide visual confirmation to the vehicle occupant that they are getting the proper vehicle treatment services that they selected and paid for. It will be appreciated that the illumination elements can be associated with the first vehicle zone **240** in other ways other than with the components, including signs and displays.

According to another aspect, as the vehicle **12** proceeds into a second vehicle zone **242**, the illumination elements of the components in the second vehicle zone **242** may be illuminated in the color blue to match that of the vehicle occupant's blue package selection. According to another aspect, as the vehicle **12** proceeds into a third vehicle zone **244**, the controller **38** can direct the illumination elements on the components in the third vehicle zone **244** to emit a color matching the vehicle occupant's section, which according to this example is blue. According to a still further aspect, as the vehicle **12** proceeds into a fourth vehicle zone **246**, the illumination elements of the components in the fourth vehicle zone **246** may be illuminated in a color to match that of the vehicle occupant's package selection as directed by the controller **38**. It will be appreciated that the vehicle wash system 10 could be divided or broken down into more or less zones. It will also be appreciated that fewer than all of the components in a particular zone could be directed to emit light in a color matching that of the vehicle occupant's selection, It will also be appreciated that the illumination elements need not be associated with the component, but could otherwise be associated with the various vehicle zones.

According to another aspect, the controller **38** may control the lighting of the components within the vehicle wash system 10 to handle multiple vehicles within the wash system **10** at a given time at least two of which may have selected different packages. For example, a first vehicle occupant could enter the package selection zone **200** and select the Red colored package. After the fee is paid for this package, it could be entered into the system and recognized by the controller **38**. As the first vehicle proceeds toward the first vehicle zone **240**, the illumination elements associated with the first vehicle zone **240** can be colored red to match that vehicle's package selection. According to an aspect as the first vehicle enters the first vehicle zone **240**, a second vehicle can enter the package purchase zone 200.

In this example, the second vehicle **12** may select to have the Green package option for treatment of their vehicle. Again, after payment is received, this can be entered into the system and recognized by the controller **38**. As the first vehicle proceeds into the second vehicle zone **242**, the illumination elements in that zone can be colored red to correspond to the package selection of the first vehicle. At the same time, the controller **38** can direct that the illumination elements in the first vehicle zone **240** be colored green so that they match the color of the package selection made by the second vehicle which has just entered the first vehicle zone **240**. With the first vehicle in the second vehicle zone **242** and the second vehicle in the first vehicle zone **240**, a third vehicle can enter the package selection zone **200** and select a package option for treatment of their vehicle. According to this example, the third vehicle can select a Blue package.

According to this example, as the first vehicle 12 moves to the third vehicle zone **244**, the illumination elements associated with that zone can be colored red to match the package selection made by the vehicle occupant. Also, as the second vehicle **12** moves to the second vehicle zone **242**, the illumination elements associated with that zone can now be colored green to correspond to the package selection made by the second vehicle occupant. Additionally, as the third vehicle **12** moves into the first vehicle zone **240**, the illumination elements associated with that zone can be colored blue to match that vehicle's package selection.

Continuing further with this example, as the first vehicle moves to the fourth vehicle zone **246**, the illumination elements associated with that zone may be colored red to match that vehicle's package selection. As the second vehicle **12** moves to the third vehicle zone **244**, the illumination elements associated with that zone can now be colored green to correspond to this vehicle's package selection. Also, as the third vehicle **12** moves to the second vehicle zone **242**, the illumination elements associated with that zone can now be colored blue.

As the first vehicle **12** leaves the vehicle wash system **10** through the exit end 18, the second vehicle can move into the fourth vehicle zone **246**. As the second vehicle moves into the fourth vehicle zone **246**, the illumination elements associated with that zone can be colored green as directed by the controller **38**. At the same time, the third vehicle can then move into the third vehicle zone **244** where the illumination elements can be colored blue. As the second vehicle exits the facility through the exit end **18**, the third vehicle **12** can move to the fourth vehicle zone **246** where the illumination elements can be colored blue. The third vehicle can then also leave out of the exit end **18**. It will be appreciated that the system **10** could be employed with more or less vehicles which have selected the same or different packages.

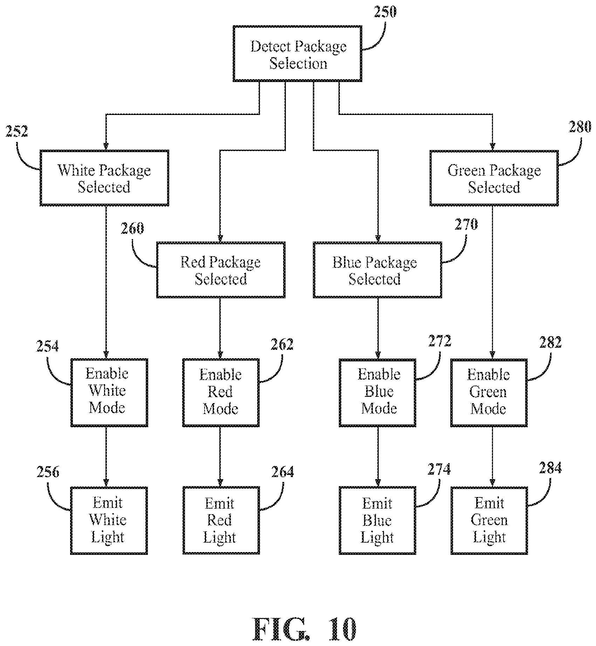

FIG 10 is a block diagram illustratively showing a method of package confirmation according to an aspect. As shown, according to an aspect, the system can detect a package selection from a vehicle owner as generally indicated by reference number **250**. If the system detects a selection of a White package, as generally indicated by reference number **252**, the White mode of the illumination elements **156** associated with the dryer assembly **100** is enabled as generally indicated by reference number **254** when the vehicle **12** approaches or is in the drying section **32**. Upon the White mode being enabled, the illumination elements can emit light in a white color, as generally indicated by reference number **256**.

According to another aspect, if the system detects a selection of a Red package, as generally indicated by reference number **260**, the Red mode of the illumination elements **156** associated with the dryer assembly **100** may be enabled as generally indicated by reference number **262**. Upon the Red mode being enabled, the illumination elements can emit light in a red color, as generally indicated by reference number **264**. According to a further aspect, if the system detects a selection of a Blue package, as generally indicated by reference number **270**, the Blue mode of the illumination elements **156** associated with the dryer assembly **100** may be enabled, as generally indicated by reference number **272** when the vehicle approaches or is in the drying section **32**. Upon the Blue mode being enabled, the illumination elements can emit light in a blue color, as generally indicated by reference number **274**. According to yet another aspect, if the system detects a selection of a Green package, as generally indicated by reference number **280**, the Green mode of the illumination elements **156** associated with the dryer assembly **100** may be enabled as generally indicated by reference number **282** when the vehicle **12** approaches or is in the drying section **32**. Upon the Green mode being enabled, the illumination elements can emit light in a green color, as generally indicated by reference number **284**.

According to another aspect, the system could be configured so that the light sources emit colors for useful proposes as opposed to for primarily aesthetic purposes. According to another aspect, the light sources could be programmed to convey other information to a vehicle owner. For example, the system could be configured so that the light sources can emit colors for navigational purposes. According to an aspect, sensors in the system could detect a variety of inputs, including vehicle location and speed and communicate that to the system controller. The controller can then enable the light sources associated with the dryers to emit light in a particular color based on these detected inputs. For example, if the system determines that a vehicle is going too fast, the controller can direct the light source to emit a yellow color communicating to the vehicle operator that they should slow down. Additionally, the controller could direct the light source to emit a red light telling the vehicle to stop. Similarly, the controller could direct the light source to emit a green color to let the vehicle operator know that it is clear for the vehicle to proceed. Other colors could be utilized to communicate other navigational information. According to a further aspect, the light sources could employ the RGB color model, where red, green, and blue light are added together in various ways to reproduce a broad array of colors, as is known.

According to an aspect, the light sources on the dryer assembly **100** could be configured to separately emit lights of different colors sequentially when the vehicle is in or approaching the dryer section **32**. According to another aspect, the light sources may each be in communication with the controller **38** so that they may be programmed to emit the same color from each of the dryer units **104** in synchronization or unison. According to another aspect, the controller **38** could be programmed to emit colors in a particular pattern or sequence. For example, the following color sequence could be emitted from each component: blue, followed by red, followed by green, followed by yellow. It will be appreciated that different colors could be emitted from the components in different orders. For example, if the RGB color sequence is employed, an infinite number of colors could be created and emitted from the light sources in a controlled fashion. According to an aspect, controlling light sources such that colored lights from various components are emitted in unison or simultaneous provides significant aesthetic benefits. This is compared to each illumination element being controlled individually where they are not in unison, which can be very distracting.

It will also be appreciated that various combinations of colors or even multiple colors could be emitted from each component at the same time. According to a still further aspect, the controller **38** could be configured to emit different colors from each of the components at the same time. It will be appreciated that any sequence, order or placement of colors may be employed. According to an aspect, emitting different colors from the light sources in a controlled pattern is considered far more attractive then emitting the colors in a random fashion.

According to an aspect of the disclosure, the controller **38** could be configured to vary the pattern of colors utilized within the system at a predetermined time. For example, the controller **38** could be emitted to vary the pattern based on a time trigger, i.e., the pattern could change every hour. According to an aspect, the controller could be configured to change the pattern based on another event, such as the location of a vehicle. The controller could be configured to switch from one pattern to another based on a variety of different events or triggers. According to a further aspect, the controller 38 could be configured to switch from one controlled pattern to another pattern randomly.

In addition to colored patterns, the controller 38 could be configured to create other effects with the lights, including flashing the lights in a pattern. The lights could also be dimmed or have a variety of other effects.

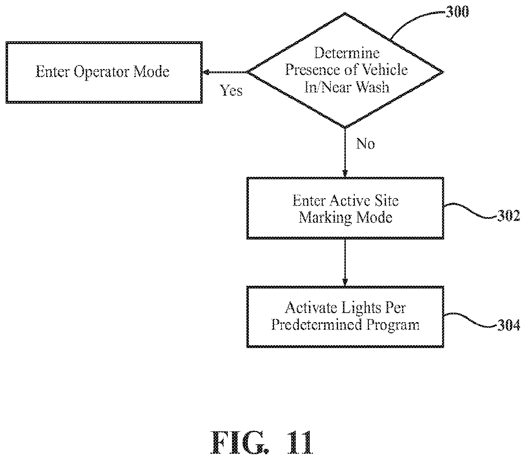

According to another aspect, the system may be configured to illuminate the lighting elements **156** associated with each of the dryer units **104** and/or within the facility upon other predetermined conditions being met or determined, For example, with reference to FIG 11, the controller **38** may be in communication with various input sources, such as motion sensors or the like, to determine whether or not any vehicles are located in the vehicle treatment area **36** or may be approaching the vehicle treatment area, as generally indicated by reference number **300.** It will be appreciated that the controller may receive inputs from a variety of different sources to assist with the determination of whether or not vehicles are in or approaching the vehicle treatment area. In the instance where no vehicles are located in the vehicle treatment area and/or approaching the vehicle treatment area, the controller **38** may place the system into an active site marketing mode, as generally indicated by reference number **302,** In the active site marketing mode, the lights on the dryer assembly **100,** as discussed above, may be signaled to illuminate in an effort to draw attention to the vehicle wash system and its services and thereby draw customers to the facilities. This active site marketing mode can be used to increase revenue for the facility. According to another aspect, the controller **38** could enable the active site marketing mode based on a variety of other inputs or ways, including time. According to another aspect, the controller **38** can be in communication with other effects that can be actuated when the active site marketing mode is enabled, such as music.

According to an aspect, in active site marketing mode, the controller **38** may utilize the lighting elements within the facility to put on a light show according to a preselected program, as generally indicated by reference number **304,** According to one aspect, the controller **38** could be configured to cycle the lights on the various components between the various RGB colors available. For example, the controller **38** may be programmed such that in the active site marketing mode, it cycles between red, blue, green, yellow (red + green), purple (red + blue), cyan (green + blue) and white (red + green + blue). Alternatively, the controller **38** could be configured to cycle the lighting elements through less than all of these colors or in a variety of different patterns. It will also be appreciated that the controller **38** could be programmed to employ variations of these colors by changing the intensity of the primary colors, as will be appreciated by one of ordinary skill in the art to achieve an almost unlimited number of different colors. According to a further aspect, in the active site marketing mode, the controller **38** may be configured to have the lights blink, flash or employ a variety of different effects. It will further be appreciated that the effects may vary and that different components may have different effects as desired. It will also be appreciated that the active site marketing mode may have different profiles that can result in different light shows. For example, there can be a summer schedule, a winter schedule or a holiday schedule (i.e. Christmas or Halloween) that when enabled can display a light show tailored to that particular event or schedule. A variety of other schedules may also be employed including bearing colors for a local sports team or university on game day or other special event. It will also be appreciated that the controller **38** can be programmed to illuminate the lights in colors that are randomly determined.

According to a still further aspect and as discussed above, the controller **38** can be configured during the active site marketing mode to illuminate lights on the various components that make up the vehicle wash system while the components are rotating. This can serve to further draw attention to the vehicle wash facility and its services, including after hours. Alternatively, the lights may be illuminated while the components are at rest. It will also be appreciated in accordance with the disclosure herein, that lights may be employed in a variety of other locations in addition to or instead of on the components.

The active site marketing mode can serve to draw attention to the vehicle wash facility and advertise to the public, including passing vehicles, that the facility is a vehicle wash and provides wash services. According to another aspect, when a vehicle is sensed as arriving, the controller **38** may disable active site marketing mode and enable operator mode, as generally indicated by reference number **306,** which allows an operator to select a vehicle wash package for a user, The controller can then display the lights on the dryer assembly **100** to a package confirmation mode, as discussed above. It will be appreciated that active site marketing can operate at all time and may operate independently of package confirmation or any other feature.

According to a further aspect, the controller **38** may be configured to enable active site marketing mode within a predetermined period of no vehicle being sensed at the vehicle wash. It will be appreciated that active site marketing mode can be enabled based on a variety of other inputs or criteria. For example, it may be manually triggered by an operator by toggling a switch, It can also be accomplished from a remote input, such as through a mobile device configured to communicate with the controller **38.**

According to another aspect, the controller **38** may utilize the lights to communicate information about the wash system and its components to the operators, including diagnostic information. As is known, vehicle wash systems employ controllers that constantly monitor the system and its operation. To the extent something with the system is not operating as expected or requires attention, these controllers can generate a fault code. The fault code can be a critical one that requires the system to be shut down or a non-critical one that requires some attention on the part of the operator, but does not require the system to be shut down. Typically, vehicle wash systems employ humans at the front and back of the system and thus they are not able to see if there is anything irregular going on with the wash and/or generally do not have line of sight with the controller to see or hear any alarms that may be triggered by the controller in the event a fault is detected. As such, the controller typically generates a fault code and transmits this code to an operator so they may take action. However, operators may not always notice or respond to the message immediately, particularly if they are not at the facility or if the fault is of the non-critical type.

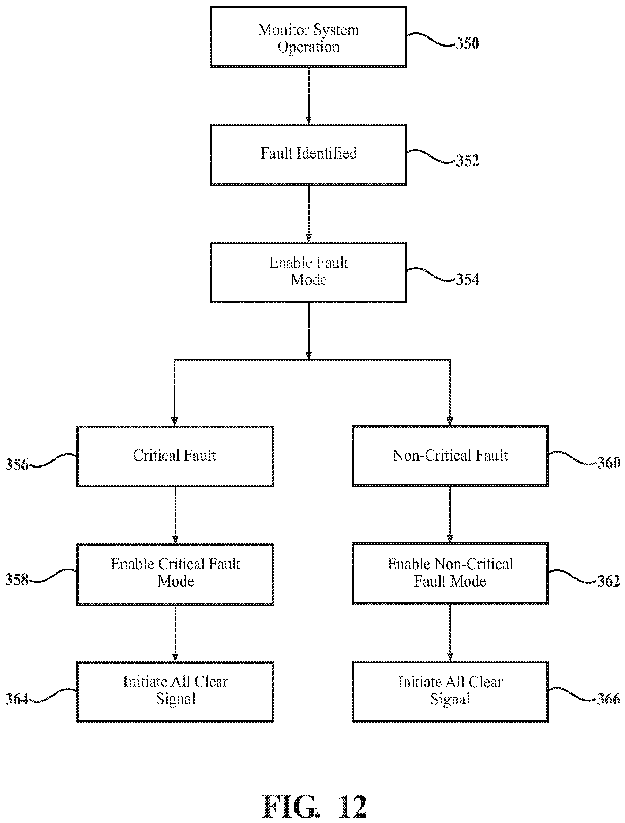

According to this aspect of the disclosure and with reference to FIG 12, the controller **38** may be in communication with various sensors and inputs in order to evaluate the operation of the system, as generally indicated by reference number **350,** In the event the controller **38** identifies a fault, as generally indicated by reference number **352,** it can be configured to enable a fault mode, as generally indicated by reference number **354.**

According to a further aspect, in the fault mode, the controller 38 can be configured to illuminate lights within the vehicle wash facility, including the lights on the vehicle wash components to communicate information about the fault to operators. According to an exemplary aspect, if the fault is a critical fault requiring a system shut down or an emergency system shut down, as generally indicated by reference number **356,** the controller **38** may be configured to illuminate the Sights on the components "red", as generally indicated by reference number **358.** The controller **38** may also be configured to have the lights flash or blink. In addition to illuminating the lights in a red color, the controller **38** can also be configured to shut the system down entirely to allow the fault to be addressed. The blinking red lights can alert the vehicle operator to attend to the fault. It will be appreciated that the controller **38** can also be configured to send specific fault information to the operator, such as by e-mail or text, so that the operator has specific information about the nature of the fault and can quickly resolve the fault or take other action as may be necessary. It will be appreciated that a variety of different sensed conditions can cause the controller **38** to trigger a critical fault, such as contact between a vehicle and a wash component. It will also be appreciated that the controller can be configured to illuminate lights in different colors for different critical faults or employ different lighting effects for different critical faults to convey more specific information to an operator regarding the fault based on the lighting elements alone. For example, one type of critical fault may cause the lights to flash red while another may cause the lights have a specific pattern of flashing red that will be recognizable to the wash operator.

In the event the controller **38** identifies a fault as a non-critical fault, as generally indicated by reference number **360,** the controller **38** can then enable the non-critical fault mode, as generally indicated by reference number **362,** According to an aspect, a non-critical fault may be one that is important and requires action, but does not require shut down of the system. An exemplary non-critical fault condition may be a determination that the supply of chemicals is low and requires refilling, In the event such a non-critical fault is determined, the controller **38** may be configured to cause the lights on the vehicle wash components to flash in a color yellow. Again, it will be appreciated that a variety of other conditions that are input into the controller **38** may cause it to enable the non-critical fault mode. It will further be appreciated that the color assigned to the lights and or the lighting effect may obviously vary for different non-critical fault conditions. Additionally, it will be appreciated that the fault mode may be a temporary condition that the controller implements on some lights or some components. The fault mode may supplement or supplant the operating mode, including the package confirmation mode, discussed above.

According to still another aspect, once the controller **38** senses that a fault condition no longer exists, it can be configured to emit an all clear signal, as generally indicated by reference number **364,** This can be accomplished by flashing the lights in the system green. According to an example, when the controller **38** senses that two vehicles being treated by the system may be in too close of proximity to one another, the controller can enable the non-critical fault mode. Under this example, lights associated with some or all of the various system components may be configured to blink a color, such as blue. They may remain blinking this color until the controller senses that the fault condition has been rectified. In that event, the controller **38** may then emit the all clear signal and flash the lights that were blinking blue a green color.

According to an aspect, the utilization of the controller in this fashion can allow the car wash to be self-monitoring and also perform self-diagnostics, The controller can then communicate the information it has sensed or determined from the various inputs it monitors to wash operators and employees by coloring the lights with specific colors and effects that have been pre-assigned to be associated with certain fault conditions, This can allow the operators and employees to take any necessary action that may be required as a result of the fault condition in a prompt manner to minimize any down time of the system.

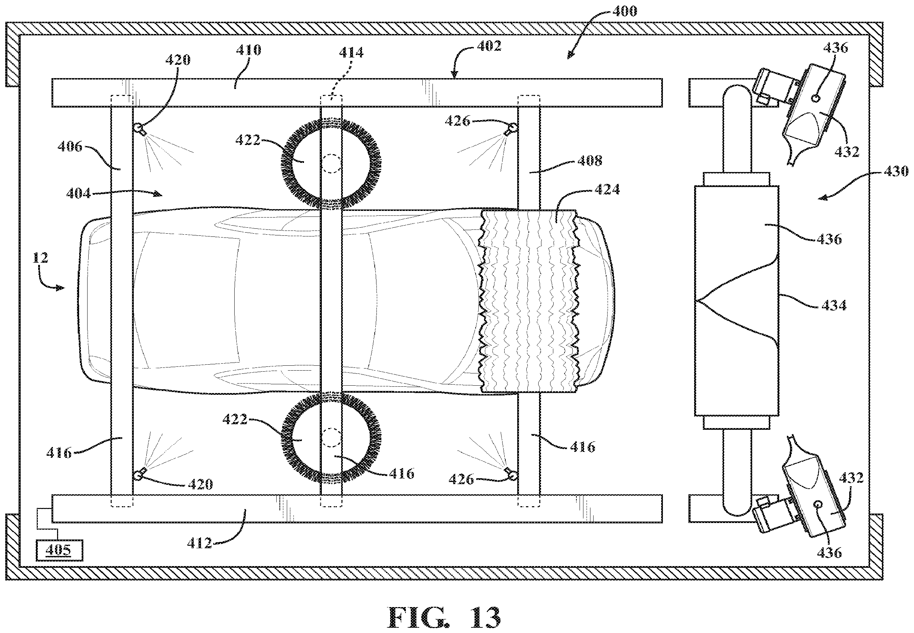

According to a still further aspect, the vehicle wash system **400** could be configured as an in-bay or rollover wash system where the vehicle remains stationary while the wash components translate or move with respect to the vehicle 12. With reference to FIG 13, an exemplary wash system is provided.

According to an aspect, the wash system **400** can include a frame structure **402** that is disposed adjacent a vehicle treatment area **404.** According to an aspect, the frame structure **402** can consist of a single gantry or multiple gantries that move under direction of a controller **405** on parallel overhead rails. According to an aspect, an exemplary system can include an entry gantry **406** and an exit gantry **408** that are supported on and move with respect to the vehicle treatment area on overhead rails **410, 412.** The system can also include a center gantry **414.** Each gantry can include a pair of upstanding legs that extend from the floor surface and are connected at their upper ends by an upper cross-piece member **416.**

As will be appreciated, the entry gantry **406** can include a plurality of side brushes **418** for engaging side exterior surfaces of the vehicle **12.** The entry gantry **406** can also have a plurality of spray nozzles **420** for spraying water or chemical onto the exterior surface of the vehicle. According to another aspect, the exit gantry **408** can also include a plurality of side brushes **422** for engaging side exterior surfaces of the vehicle. The exit gantry 408 can also include a top brush **424** for engaging an upper exterior surface of the vehicle. The exit gantry can also include a plurality of spray nozzles **426.** It will be appreciated that more or different wash or treatment components can be disposed on one or both gantries.

As will be understood, once a vehicle enters and stops in the vehicle treatment area **404,** the controller can direct movement of the gantries to wash and clean the exterior vehicle surface. Upon completion of this process, the vehicle can be directed to move forward to a dryer assembly **430.** The dryer assembly **430** may be stationary or may be configured to move with respect to the vehicle. According to a still further aspect, the dryer assembly **430** may be incorporated onto the frame structure **402.**

According to an aspect, the dryer assembly **430** can include a pair of side dryer units **432** and an overhead blower assembly **434.** Each of the side dryer units **432** and the overhead blower assembly **434** can be formed of a translucent material and can have one or more illumination sources **436** disposed therein or otherwise associated therewith. The dryer assembly **430** and the associated illumination sources **436** may be in communication with the controller **405** such that the light sources **436** may be enabled to convey information to the vehicle owner or the vehicle wash operator. For example, the light sources **436** may be enabled in a color corresponding to the wash package selected by the vehicle owner. Alternatively, the light sources **436** may be enabled to emit light in a predetermined program of colors when no vehicles are present in the vehicle treatment area **404.** It will also be appreciated that the light sources **436** can have a variety of different modes to convey information, such as diagnostic information about the system of navigational information.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Many other embodiments may be apparent to those of skill in the art upon reviewing the disclosure. Other embodiments may be used and derived from the disclosure, such that a structural substitution, logical substitution, or another change may be made without departing from the scope of the disclosure. Accordingly, the disclosure is to be regarded as illustrative rather than restrictive.

Certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The above-disclosed subject matter is to be considered illustrative, and not restrictive, and the appended claims are intended to cover any and all such modifications, enhancements, and other embodiments that fall within the scope of the present invention. Thus, to the maximum extent allowed by law, the scope of the present invention is to be determined by the broadest permissible interpretation of the following claims and shall not be restricted or limited by the foregoing detailed description.

Although only a few exemplary embodiments have been described in detail above, those skilled in the art will readily appreciate that many modifications are possible in the exemplary embodiments without materially departing from the novel teachings and advantages of the embodiments of the present disclosure. Accordingly, all such modifications are intended to be included within the scope of the embodiments of the present disclosure as defined in the following claims.

## Claims

1. A vehicle treatment system, comprising:
at least one dryer element (120) disposed adjacent an exit end of the vehicle treatment system, the at least one dryer element (120) having an inlet, a housing, and at least one outlet for emitting high velocity air onto an exterior surface of a vehicle;
at least one light source (156) associated with the dryer element (120), the at least one light source (156) having a plurality of modes with each of the plurality of modes associated with at least one of a plurality of different system states;
a controller (158) in communication with the at least one light source (156) and configured to receive data representative of a detected system state, the controller further configured to activate one of the plurality of modes in response to the detected system state;
wherein, in at least one of the plurality of modes, the controller (158) is configured to direct the at least one light source (159) to emit light in a predetermined color;
**characterized in that**
the housing, the inlet and the outlet are part of an integral structure, wherein the housing is constructed of a translucent material; an elongated housing structure (154) of translucent material is disposed within an interior of the housing for holding the at least one light source (156)
wherein the at least one light source (156) is disposed within an interior of the housing structure (154) and is configured to emit light through the housing (130) when at least one of the plurality of modes is enabled.

2. The vehicle treatment system of claim 1, wherein the at least one light source (156) consists of an LED array.

3. The vehicle treatment system of claim 1, further comprising:
a system state detector (250) configured to determine a system state in effect and further configured to communicate data representative of the detected system state to the controller (158) for enabling of a corresponding mode of the at least one light source (156).

4. The vehicle treatment system of claim 3, wherein the system state detector (250) is an input device (204) and the detected system state is a user selection input into the input device of one vehicle wash package from among a plurality of vehicle wash packages with each of the plurality of vehicle wash packages associated with different groups of vehicle services;
wherein the predetermined color is one of a plurality of different colors; and
wherein each of the vehicle wash packages is associated a corresponding with one of the plurality of different colors.

5. The vehicle treatment system of claim 1, wherein each of the plurality of modes corresponds to one of a plurality of vehicle wash packages;
wherein the predetermined color is one of a plurality of different colors; wherein the detected system state includes user selected vehicle wash package;
wherein the controller (158), in response to the data received representative of the user selected vehicle wash package, is configured to enable the associated mode of the at least one light source (156) such that light with one of plurality of different colors associated with the user selected vehicle wash package is emitted therefrom.

6. The vehicle treatment system of claim 3, wherein the system state detector (250) includes one or more motion sensors configured to detect a presence of one or more vehicles in a vehicle treatment area and wherein the detected system state is an absence of any vehicles present in the vehicle treatment system;
wherein, in response to data received which is representative of the absence of any vehicles being present in the vehicle wash system, the controller (158) is configured to enable a marketing mode.

7. The vehicle treatment system of claim 6, wherein in the marketing mode, the at least one light source (156) is configured to emit light in a predetermined program of colors.

8. The vehicle treatment system of claim 1, wherein the detected system state is a system fault and wherein, in response to data received which is representative of a detected system fault, the controller (158) is configured to enable a mode of the at least one light source that corresponds to the detected system fault.

9. The vehicle treatment system of claim 8, wherein the system fault has an associated fault type with an associated color and wherein the mode corresponding to the detected system fault results in the at least one light source (156) emitting light in the color associated with the fault type of the detected system fault.

10. A vehicle treatment system comprising:
a dryer element disposed on a frame adjacent an exit end of the system, the dryer element (120) having an air inlet, a plurality of air outlets, and a housing (130) constructed of a translucent material;
at least one light source (156) disposed to illuminate the translucent housing (130) and configured to emit light in a plurality of different colors, the at least one light source having a plurality of modes each corresponding to a different system condition; and
a controller (158) in communication with the at least one light source (156) and configured to enable a distinct one of the plurality of modes in response to a detected system condition;
an elongated housing structure (154) of translucent material disposed within an interior of the housing (130) and holding the at least one light source (156) .

11. The vehicle treatment system of claim 10, wherein the detected system condition corresponds to a wash package selection received from a user, wherein the wash package selection corresponds to a unique set of wash components for engaging a user's vehicle as part of a vehicle wash process; and
wherein the controller (158) is configured to enable a package confirmation mode of the at least one light source (156) in response to the received wash package selection.

12. The vehicle treatment system of claim 10, wherein the at least one light source (156) is disposed in the housing (130) and configured to emit light through the housing (130) when each of the plurality of modes is enabled.

13. The vehicle treatment system of claim 11, wherein the selected wash package is one of a plurality of different wash packages from which the user could select with each of the plurality of different wash packages having an associated color identifier; and
wherein, in the package confirmation mode, the controller (158) is configured to direct the at least one light source (156) to emit light in a color corresponding to the associated color identifier of the selected wash package.

14. The vehicle treatment system of claim 10, further comprising:
a sensing device to determine a presence of one or more vehicles in a vehicle treatment area, wherein the detected system condition corresponds to an absence of any vehicles in the vehicle treatment area; and
wherein the controller (158) is configured to enable a marketing mode in response to the detected system condition corresponding to the absence of any vehicles in the vehicle treatment area whereby the at least one light source (156) is configured to emit light in a predetermined pattern of colors.

15. The vehicle treatment system of claim 10, wherein the system condition corresponds with a detected diagnostic condition of the system; and
wherein the controller (158) is configured to enable a diagnostic information mode and direct the at least one light source (156) to emit light in a color that corresponds with the detected diagnostic condition of the system.

## Patentansprüche

1. Fahrzeugbehandlungssystem, umfassend:
mindestens ein Trocknerelement (120), das angrenzend an ein Ausgangsende des Fahrzeugbehandlungssystems angeordnet ist, wobei das mindestens eine Trocknerelement (120) einen Einlass, ein Gehäuse und mindestens einen Auslass zum Abgeben von Hochgeschwindigkeitsluft auf eine Außenfläche eines Fahrzeugs aufweist;
mindestens eine Lichtquelle (156), die dem Trocknerelement (120) zugeordnet ist, wobei die mindestens eine Lichtquelle (156) eine Vielzahl von Modi aufweist, wobei jeder der Vielzahl von Modi mindestens einem einer Vielzahl von verschiedenen Systemzuständen zugeordnet ist;
eine Steuerung (158), die mit der mindestens einen Lichtquelle (156) verbunden ist und konfiguriert ist, um für einen erkannten Systemzustand repräsentative Daten zu empfangen, wobei die Steuerung ferner konfiguriert ist, um als Reaktion auf den erkannten Systemzustand einen der Vielzahl von Modi zu aktivieren;
wobei in mindestens einem der Vielzahl von Modi die Steuerung (158) konfiguriert ist, um die mindestens eine Lichtquelle (159) anzuweisen, Licht in einer vorbestimmten Farbe zu emittieren;
**dadurch gekennzeichnet, dass**
das Gehäuse, der Einlass und der Auslass Teil einer integralen Struktur sind, wobei das Gehäuse aus einem transluzenten Material gefertigt ist; eine längliche Gehäusestruktur (154) aus transluzentem Material innerhalb eines Innenraums des Gehäuses angeordnet ist, um die mindestens eine Lichtquelle (156) zu halten,
wobei die mindestens eine Lichtquelle (156) innerhalb eines Innenraums der Gehäusestruktur (154) angeordnet ist und konfiguriert ist, um Licht durch das Gehäuse (130) zu emittieren, wenn mindestens eine der Vielzahl von Modi aktiviert ist.

2. Fahrzeugbehandlungssystem nach Anspruch 1, wobei die mindestens eine Lichtquelle (156) aus einem LED-Array besteht.

3. Fahrzeugbehandlungssystem nach Anspruch 1, ferner umfassend:
einen Systemzustandsdetektor (250), der konfiguriert ist, um einen aktuellen Systemzustand zu bestimmen, und der ferner konfiguriert ist, um Daten, die für den erkannten Systemzustand repräsentativ sind, an die Steuerung (158) zu übertragen, um einen entsprechenden Modus der mindestens einen Lichtquelle (156) zu aktivieren.

4. Fahrzeugbehandlungssystem nach Anspruch 3, wobei der Systemzustandsdetektor (250) eine Eingabevorrichtung (204) ist und der erkannte Systemzustand eine Benutzerauswahl eines Fahrzeugwaschpakets aus einer Vielzahl von Fahrzeugwaschpaketen ist, die in die Eingabevorrichtung eingegeben wird, wobei jedes der Vielzahl von Fahrzeugwaschpaketen mit unterschiedlichen Gruppen von Fahrzeugdienstleistungen verbunden ist;
wobei die vorbestimmte Farbe eine aus einer Vielzahl von verschiedenen Farben ist;
und
wobei jedes der Fahrzeugwaschpakete einer zugehörigen Farbe aus der Vielzahl von unterschiedlichen Farben zugeordnet ist.

5. Fahrzeugbehandlungssystem nach Anspruch 1, wobei jeder der Vielzahl von Modi einem von mehreren Fahrzeugwaschpaketen entspricht;
wobei die vorbestimmte Farbe eine aus einer Vielzahl von verschiedenen Farben ist; wobei der erkannte Systemzustand das vom Benutzer ausgewählte Fahrzeugwaschpaket einschließt;
wobei die Steuerung (158) als Reaktion auf die empfangenen Daten, die für das vom Benutzer ausgewählte Fahrzeugwaschpaket repräsentativ sind, konfiguriert ist, um den zugehörigen Modus der mindestens einen Lichtquelle (156) zu aktivieren, so dass Licht mit einer von der Vielzahl von verschiedenen Farben, die dem vom Benutzer ausgewählten Fahrzeugwaschpaket zugeordnet ist, von dieser emittiert wird.

6. Fahrzeugbehandlungssystem nach Anspruch 3, wobei der Systemzustandsdetektor (250) einen oder mehrere Bewegungssensoren enthält, die konfiguriert sind, um eine Anwesenheit von einem oder mehreren Fahrzeugen in einem Fahrzeugbehandlungsbereich zu erkennen, und wobei der erkannte Systemzustand eine Abwesenheit von im Fahrzeugbehandlungssystem vorhandenen Fahrzeugen ist;
wobei die Steuerung (158) als Reaktion auf empfangene Daten, die für die Abwesenheit von Fahrzeugen in der Fahrzeugwaschanlage repräsentativ sind, konfiguriert ist, um einen Marketingmodus zu aktivieren.

7. Fahrzeugbehandlungssystem nach Anspruch 6, wobei im Marketingmodus die mindestens eine Lichtquelle (156) konfiguriert ist, um Licht in einem vorbestimmten Programm von Farben zu emittieren.

8. Fahrzeugbehandlungssystem nach Anspruch 1, wobei der erkannte Systemzustand ein Systemfehler ist und wobei als Reaktion auf empfangene Daten, die für einen erkannten Systemfehler repräsentativ sind, die Steuerung (158) konfiguriert ist, um einen Modus der mindestens einen Lichtquelle zu aktivieren, der dem erkannten Systemfehler entspricht.

9. Fahrzeugbehandlungssystem nach Anspruch 8, wobei der Systemfehler einen zugeordneten Fehlertyp mit einer zugeordneten Farbe aufweist und wobei der dem erkannten Systemfehler entsprechende Modus dazu führt, dass die mindestens eine Lichtquelle (156) Licht in der dem Fehlertyp des erkannten Systemfehlers zugeordneten Farbe emittiert.

10. Fahrzeugbehandlungssystem umfassend:
ein Trocknerelement, das auf einem Rahmen angrenzend an ein Ausgangsende des Systems angeordnet ist, wobei das Trocknerelement (120) einen Lufteinlass, eine Vielzahl von Luftauslässen und ein aus einem transluzenten Material gefertigtes Gehäuse (130) aufweist;
mindestens eine Lichtquelle (156), die so angeordnet ist, dass sie das transluzente Gehäuse (130) beleuchtet, und die konfiguriert ist, um Licht in einer Vielzahl von unterschiedlichen Farben zu emittieren, wobei die mindestens eine Lichtquelle eine Vielzahl von Modi aufweist, die jeweils einem unterschiedlichen Systemzustand entsprechen; und
eine Steuerung (158), die mit der mindestens einen Lichtquelle (156) verbunden und konfiguriert ist, um einen bestimmten der Vielzahl von Modi als Reaktion auf einen erkannten Systemzustand zu aktivieren;
eine längliche Gehäusestruktur (154) aus transluzentem Material, die in einem Inneren des Gehäuses (130) angeordnet ist und die mindestens eine Lichtquelle (156) hält.

11. Fahrzeugbehandlungssystem nach Anspruch 10, wobei der erkannte Systemzustand einer von einem Benutzer empfangenen Waschpaketauswahl entspricht, wobei die Waschpaketauswahl einem eindeutigen Satz von Waschkomponenten für den Einsatz am Fahrzeug eines Benutzers als Teil eines Fahrzeugwaschprozesses entspricht;
und
wobei die Steuerung (158) konfiguriert ist, um einen Paketbestätigungsmodus der mindestens einen Lichtquelle (156) als Reaktion auf die empfangene Waschpaketauswahl zu aktivieren.

12. Fahrzeugbehandlungssystem nach Anspruch 10, wobei die mindestens eine Lichtquelle (156) in dem Gehäuse (130) angeordnet und konfiguriert ist, Licht durch das Gehäuse (130) zu emittieren, wenn jeder der Vielzahl von Modi aktiviert ist.

13. Fahrzeugbehandlungssystem nach Anspruch 11, wobei das ausgewählte Waschpaket eines aus einer Vielzahl von verschiedenen Waschpaketen ist, aus denen der Benutzer auswählen konnte, wobei jedes der Vielzahl von verschiedenen Waschpaketen einen zugehörigen Farbidentifikator aufweist; und
wobei in dem Paketbestätigungsmodus die Steuerung (158) konfiguriert ist, um die mindestens eine Lichtquelle (156) anzuweisen, Licht in einer Farbe zu emittieren, die dem zugehörigen Farbidentifikator des ausgewählten Waschpakets entspricht.

14. Fahrzeugbehandlungssystem nach Anspruch 10, ferner umfassend:
eine Erfassungsvorrichtung, um ein Vorhandensein von einem oder mehreren Fahrzeugen in einem Fahrzeugbehandlungsbereich zu bestimmen, wobei der erkannte Systemzustand einer Abwesenheit von Fahrzeugen in dem Fahrzeugbehandlungsbereich entspricht; und
wobei die Steuerung (158) konfiguriert ist, um einen Marketingmodus als Reaktion auf den erkannten Systemzustand, welcher der Abwesenheit jeglicher Fahrzeuge in dem Fahrzeugbehandlungsbereich entspricht, zu aktivieren, wodurch die mindestens eine Lichtquelle (156) konfiguriert ist, um Licht in einem vorbestimmten Farbmuster zu emittieren.

15. Fahrzeugbehandlungssystem nach Anspruch 10, wobei der Systemzustand einem erkannten Diagnosezustand des Systems entspricht; und
wobei die Steuerung (158) konfiguriert ist, um einen Diagnoseinformationsmodus zu aktivieren und die mindestens eine Lichtquelle (156) anzuweisen, Licht in einer Farbe zu emittieren, die dem erkannten Diagnosezustand des Systems entspricht.

## Revendications

1. Un système de traitement de véhicule, comprenant :
au moins un élément de séchage (120) disposé à côté d'une extrémité de sortie du système de traitement du véhicule, le au moins un élément de séchage (120) ayant une entrée, un logement et au moins une sortie pour émettre de l'air à grande vitesse sur une surface extérieure d'un véhicule ;
au moins une source de lumière (156) associée à l'élément de séchage (120), la au moins une source de lumière (156) ayant une pluralité de modes, chacun de la pluralité de modes étant associé à au moins un d'une pluralité d'états différents du système ;
un contrôleur (158) en communication avec la au moins une source de lumière (156) et configuré pour recevoir des données représentatives d'un état de système détecté, le contrôleur étant en outre configuré pour activer l'un des multiples modes en réponse à l'état de système détecté ;
dans lequel, dans au moins un des différents modes, le contrôleur (158) est configuré pour diriger la au moins une source de lumière (159) pour qu'elle émette de la lumière dans une couleur prédéterminée ;
**caractérisé en ce que**
le logement, l'entrée et la sortie font partie d'une structure intégrale, dans lequel le logement est construit en un matériau translucide ; une structure de logement allongée (154) en matériau translucide est disposée à l'intérieur du logement pour contenir la au moins une source de lumière (156)
dans lequel la au moins une source de lumière (156) est disposée à l'intérieur de la structure de logement (154) et est configurée pour émettre de la lumière à travers le boîtier (130) lorsqu'au moins un de la pluralité de modes est activé.

2. Système de traitement de véhicule selon la revendication 1, dans lequel la au moins une source de lumière (156) est constituée d'un réseau de LED.

3. Le système de traitement de véhicule de la revendication 1, comprenant en outre :
un détecteur d'état du système (250) configuré pour déterminer un état du système en vigueur et configuré en outre pour communiquer des données représentatives de l'état du système détecté au contrôleur (158) pour activer un mode correspondant de la au moins une source de lumière (156).

4. Système de traitement de véhicules selon la revendication 3, dans lequel le détecteur d'état du système (250) est un dispositif d'entrée (204) et l'état du système détecté est une entrée de sélection par l'utilisateur dans le dispositif d'entrée d'un ensemble de lavage de véhicules parmi une pluralité d'ensembles de lavage de véhicules, chacun de la pluralité d'ensembles de lavage de véhicules étant associé à différents groupes de services de véhicules ;
dans lequel la couleur prédéterminée est l'une d'une pluralité de couleurs différentes ;
et
dans lequel chacun des ensembles de lavage de véhicules est associé à une couleur correspondante parmi la pluralité de couleurs différentes.

5. Système de traitement de véhicules selon la revendication 1, dans lequel chacun de la pluralité de modes correspond à l'un d'une pluralité d'ensembles de lavage de véhicules ;
dans lequel la couleur prédéterminée est l'une d'une pluralité de couleurs différentes ; dans lequel l'état du système détecté comprend un ensemble de lavage de véhicules sélectionné par l'utilisateur ;
dans lequel le contrôleur (158), en réponse aux données reçues représentatives du module de lavage de véhicules sélectionné par l'utilisateur, est configuré pour activer le mode associé de la au moins une source de lumière (156) de sorte que la lumière avec l'une d'une pluralité de couleurs différentes associées au module de lavage de véhicules sélectionné par l'utilisateur est émise à partir de celle-ci.

6. Système de traitement de véhicules selon la revendication 3, dans lequel le détecteur d'état du système (250) comprend un ou plusieurs capteurs de mouvement configurés pour détecter une présence d'un ou plusieurs véhicules dans une zone de traitement de véhicules et dans lequel l'état du système détecté est une absence de tout véhicule présent dans le système de traitement de véhicules ;
dans lequel, en réponse aux données reçues qui sont représentatives de l'absence de tout véhicule présent dans le système de lavage de véhicules, le contrôleur (158) est configuré pour activer un mode de commercialisation.

7. Système de traitement de véhicule selon la revendication 6, dans lequel, en mode de commercialisation, la au moins une source de lumière (156) est configurée pour émettre de la lumière selon un programme de couleurs prédéterminé.

8. Système de traitement de véhicule selon la revendication 1, dans lequel l'état de système détecté est une erreur de système et dans lequel, en réponse aux données reçues qui sont représentatives d'une erreur de système détectée, le contrôleur (158) est configuré pour activer un mode de la au moins une source lumineuse qui correspond à l'erreur de système détectée.

9. Système de traitement de véhicule selon la revendication 8, dans lequel la défaillance du système a un type de défaillance associé avec une couleur associée et dans lequel le mode correspondant à la défaillance du système détectée a pour résultat qu'au moins une source de lumière (156) émet de la lumière dans la couleur associée au type de défaillance de la défaillance du système détectée.

10. Un système de traitement de véhicule, comprenant :
un élément de séchage disposé sur un cadre adjacent à une extrémité de sortie du système, l'élément de séchage (120) ayant une entrée d'air, une pluralité de sorties d'air, et un boîtier (130) construit en un matériau translucide ;
au moins une source de lumière (156) disposée pour éclairer le boîtier translucide (130) et configurée pour émettre de la lumière dans une pluralité de couleurs différentes, la au moins une source de lumière ayant une pluralité de modes correspondant chacun à une condition différente du système ; et
un contrôleur (158) en communication avec la au moins une source de lumière (156) et configuré pour activer un mode distinct parmi la pluralité de modes en réponse à une condition de système détectée ; une structure de boîtier allongée (154) en matériau translucide disposée à l'intérieur du logement (130) et contenant la au moins une source de lumière (156)

11. Le système de traitement de véhicule de la revendication 10, comprenant en outre :
l'état du système correspond à une sélection de forfaits de lavage reçue d'un utilisateur, dans laquelle la sélection de forfaits de lavage correspond à un ensemble unique de composants de lavage pour engager le véhicule d'un utilisateur dans le cadre d'un processus de lavage de véhicule ;
et
dans lequel le contrôleur (158) est configuré pour activer un mode de confirmation de paquet de la au moins une source de lumière (156) en réponse à la sélection de paquet de lavage reçue.

12. Système de traitement de véhicule selon la revendication 10, dans lequel la au moins une source de lumière (156) est disposée dans le boîtier (130) et configurée pour émettre de la lumière à travers le boîtier (130) lorsque chacun de la pluralité de modes est activé.

13. Système de traitement de véhicule selon la revendication 11, dans lequel l'ensemble de lavage sélectionné est l'un d'une pluralité d'ensembles de lavage différents parmi lesquels l'utilisateur pourrait choisir, chacun de la pluralité d'ensembles de lavage différents ayant un identificateur de couleur associé ; et
dans lequel, dans le mode de confirmation d'ensemble, le contrôleur (158) est configuré pour diriger la au moins une source de lumière (156) pour émettre de la lumière dans une couleur correspondant à l'identificateur de couleur associé de l'ensemble de lavage sélectionné.

14. Le système de traitement de véhicule de la revendication 10, comprenant en outre :
un dispositif de détection pour déterminer une présence d'un ou plusieurs véhicules dans une zone de traitement de véhicules, dans lequel la condition de système détectée correspond à une absence de tout véhicule dans la zone de traitement de véhicules ; et
dans lequel le contrôleur (158) est configuré pour activer un mode de commercialisation en réponse à la condition de système détectée correspondant à l'absence de tout véhicule dans la zone de traitement de véhicules, moyennant quoi la au moins une source de lumière (156) est configurée pour émettre de la lumière selon un modèle de couleurs prédéterminé.

15. Système de traitement de véhicule selon la revendication 10, dans lequel l'état du système correspond à un état de diagnostic détecté du système ; et
dans lequel le contrôleur (158) est configuré pour activer un mode d'information de diagnostic et diriger la au moins une source de lumière (156) pour émettre de la lumière dans une couleur qui correspond à l'état de diagnostic détecté du système.
